# EUROPEAN PATENT APPLICATION

(11) **EP 0 541 137 A1**
(43) Date of publication of application: **12.05.1993**
(21) Application number: 92201097.0
(22) Date of filing: 21.04.1992
(51) Int. Cl.: B23B 31/30, B23Q 1/00

(54) **Workpiece chuck device for machine tools**

(30) Priority: 30.10.1991 JP 284502/91
(71) Applicant: FUJII SEIMITSU KOGYO CO., LTD., Nara City (JP)
(72) Inventor: Sato, Takao, c/o Fujii Seimitsu Kogyo Co., Ltd., Nara City (JP)
(74) Representative: Timmermans, Anthonius C.Th., Ir.

(57) **Abstract**

In an air chuck, two radial paths for pressurized air are made in a chuck body (20). A manifold journal (30) operates separately from the chuck body (20). Since the manifold journal (30) need not rotate with the chuck body (20), it may be easily mounted on a non-rotating portion of a machine tool. The manifold journal has (30) air tubes (34,35) and a coolant tube (36) to supply pressurized air and coolant respectively. A spacer (43) with air inlets (43f,43g) is housed in a chuck body (20) and embodies structure to establish air rings in a space between the spacer (43) edge surface and a bore (21) surface of the chuck body (20) on which the chuck body (20) rides. This air bearing eliminates vibration of the rotating chuck body (20) and provides smoother rotation.

## Description

### BACKGROUND OF THE INVENTION

This invention relates to a workpiece chuck device for a machine tool. The use of workpiece chucks driven by air pressure is well known. Such devices employ rotating air lines to carry a constant source of operating air to chuck jaw operators. These rotating air lines are difficult to balance and, as a result, transmit vibration to the operating machine tool. Rotating air lines also fail readily during operation.

A predecessor device employing air pressure to operate a workpiece chuck is described in Japanese Patent Application No. 2-94863, of the applicant herein filed in Japan in 1990. This prior-art device improved upon previous embodiments by employing air tubes that do not rotate. This prior-art device holds a workpiece in a chuck with a set of hooks, either from the inside by inflating a membrane with pressurized air applied through an air inlet at the membrane's center, or from the outside by gripping the workpiece by pressing the circumference of the membrane towards a chuck body through pressurized air introduced from an air inlet bored in an adapter. The chuck body is integrated with the membrane on which the set of hooks is fixed. A manifold journal is fixed to the chuck body in order to transmit the pressurized air from the stationary tubes to the rotating chuck. In this prior-art device, the manifold journal is fixed to the chuck body and rotates with it.

### OBJECTS AND SUMMARY OF THE INVENTION

An object of the present invention is to provide a workpiece chuck device with a manifold that need not be fixed to a chuck body in order to make use of pressurized air to hold a workpiece in place.

Another object is to provide an air-operated chuck which rotates on air rings established by the pressurized air used to activate the membrane which feature allows the chuck body to rotate more smoothly during operation.

A further object of the present invention is to provide a workpiece chuck device with a manifold that does not rotate with its associated chuck body to maintain a strictly air-tight environment that insures air pressure can maintain a workpiece in proper position.

Still a further object of the present invention is to provide a workpiece chuck device with a manifold that may be easily mounted on a non-rotating part of a machine tool.

Still a further object of the present invention is to provide a workpiece chuck device with a manifold, having multiple bores and a recessed groove, that is independent of the associated chuck body and does not rotate with it.

Briefly stated, the present invention provides, in an air chuck, two radial paths for pressurized air in the chuck body and a manifold journal that operates separately from the chuck body. Since the manifold journal need not rotate with the chuck body, it may be easily mounted on a non-rotating portion of a machine tool. The manifold journal has air tubes and a coolant tube to supply pressurized air and coolant respectively. A spacer with air inlets is housed in the chuck body. An air bearing is created by the pressurized air in the space between the spacer and the chuck body. The air bearing eliminates vibration and helps the chuck body rotate smoothly.

According to an embodiment of the invention, an air-operated chuck includes a chuck body in which an inflatable membrane is carried, this membrane being actuated with a pressurized air flow to urge gripping hooks thereon into gripping contact with a workpiece. The chuck body has an axial bore therein and the axial bore is receptive of plural tubes therein for delivery of pressurized air and a coolant to use points at the chuck. A spacer is received in the axial bore and has openings therein for reception of the plural tubes , the spacer also having radial passages therein extending from communication with the spacer openings in which pressurized air carrying tubes are received to communication with a spacer edge surface. An outlet end of the pressurized air carrying tubes communicates with these radial passages whereby pressurized air can flow outlet at the spacer edges surfaces to establish annular air rings between the spacer edge surface and a surface of the axial bore of the chuck body on which the chuck body rides when the chuck body rotates about an axial central to the bore.

It will be understood to assure stabilized performance, a housing will be provided for accommodating a harness pipe holding air tubes and a coolant tube. It is required in assembling the device to mount the chuck body on a spindle after the air tubes are connected to tube couplings previously fixed to the manifold journal.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is an plan view in section of the prior art air-operated chuck assembly, with a partial internal cross-section superimposed in the structure to show the arrangement of tubes within a pipe used in this construction;
Fig. 2 is plan view in section of the air chuck assembly construction of the present invention;
Fig. 3 is an end view of a manifold journal disposed in the assembly remote from the chuck body;
Fig. 4 is a plan view partly in section of the assembly with the chuck being depicted in phantom, the pressurized air and coolant lines being shown housed in a protection pipe;
Fig. 5 is an end view of the chuck body of the present invention;
Fig. 6 is a perspective view of a protection pipe and sleeve as embodied in the present invention;
Fig. 7 is a plan view partly in phantom showing the arrangement of a spacer embodied in an axial bore of the chuck body, the spacer carrying the structure that supports the supply tubes and which allows establishment of air rings on which the chuck body rides; and Fig. 8 is an end view of the spacer.

### DETAILED DESCRIPTION OF THE PREFERRED EMBODIMENT

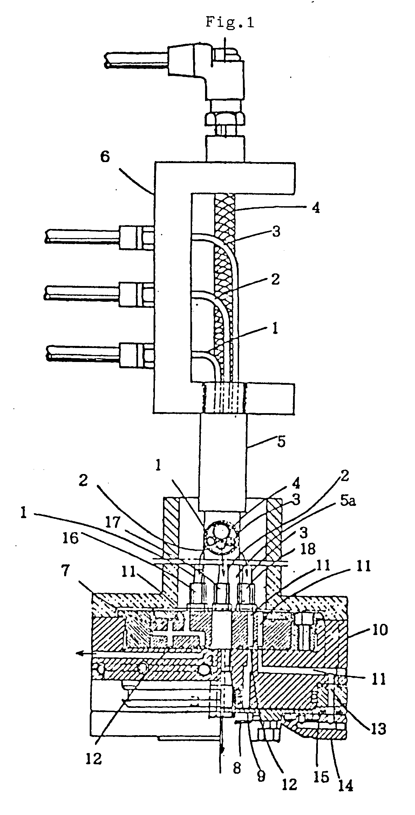

Referring to Fig. 1, a workpiece chuck device for a machine tool, as described in Japanese Patent Application No. 2-94863, holds a workpiece in a chuck body 10 with a set of hooks 8, either from the inside, by inflating a membrane 9 with pressurized air applied through an air path 11 at the membrane center, or from the outside, by pressing the circumference of membrane 9 towards the chuck body 10 through pressurized air induced from an air inlet 15 bored in an adapter 14. Chuck body 10, to which a set of hooks 8 is fixed, is integrated with membrane 9. A manifold journal 7 is mounted on a tapered end 5a of a pipe 5, which is linked to air tubes 1, 2, and 3, and a coolant tube 4. The end of pipe 5 opposite tapered end 5a is mounted on the base of a housing 6. Multiple air paths 11 are bored through manifold journal 7 and connected concentrically to a recessed groove 12 machined on the plane of manifold journal 7 opposite to chuck body 10. Multiple air paths 11 are further connected to an air inlet 13 on the outer circumference of membrane 9 and an air inlet 15 on adapter 14, which covers the circumference. Air tubes 1, 2, and 3 are respectively connected to tube couplings 16, 17, and 18. In the device of Fig. 1, manifold journal 7 must be fixed to chuck body 10 and rotate with it for the workpiece to be held in a fixed position.

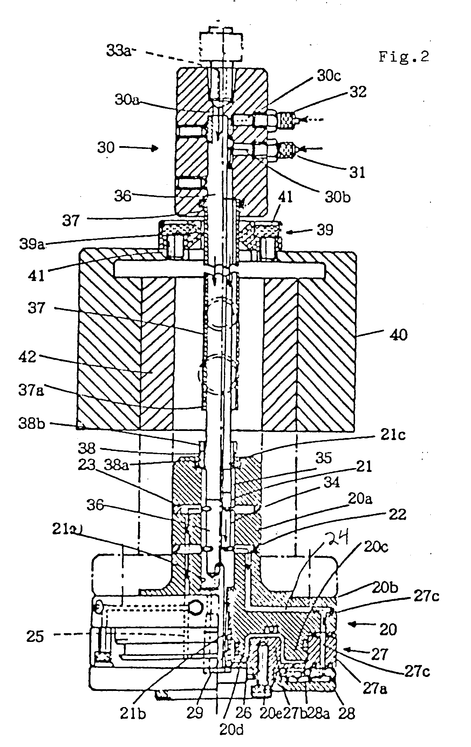

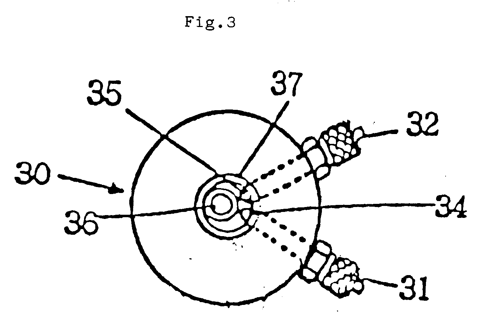

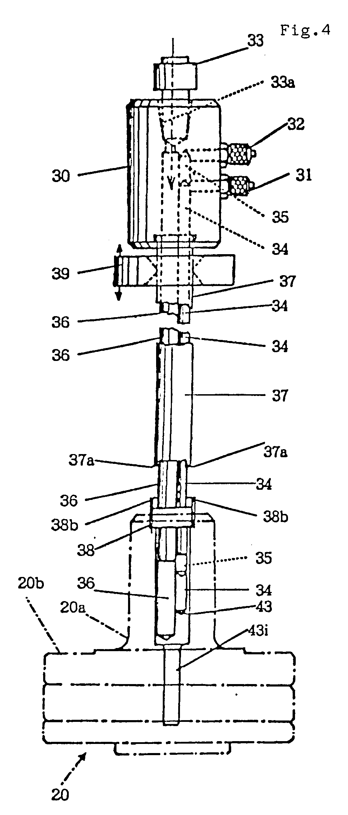

Referring to Figs. 2 - 4 the chuck device of the present invention includes a cylindrical chuck body 20 having a flange section 20b. A stepped bore 21 opens from a cylindrical section 20a of chuck body 20 through the center of a flange section 20b. An annular protrusion 20c is located around the outer circumference of flange section 20b, and an annular protrusion 20d surrounds the opening of stepped bore 21.

Cylindrical section 20a of chuck body 20 is provided with two radial blind air paths 22 and 23, which are connected to a wide portion 21a of stepped bore 21. Cylindrical section 20a is also provided with an air path 24 towards the outer circumference of flange section 20b. Air path 24 is connected to air path 22. Further, an air path 25 runs through cylindrical section 20a of chuck body 20 towards the center of flange section 20b. Air path 25 is connected to air path 23.

Ring-shaped protrusions 27a and 27b are located respectively around the circumference and in the center area of a membrane 27. These protrusions mesh smoothly with annular protrusions 20c and 20d, located respectively around the circumference and around the center of flange section 20b. Ring-shaped protrusions 27a and 27b assure air flow between a recessed annular section 20e, located between annular protrusions 20c and 20d, and the adjacent surfaces of annular protrusions 20c and 20d.

A ring-shape adapter 28 is fixed from the circumference towards the center area of membrane 27. Ring-shaped protrusion 27a is mounted around the circumference of membrane 27. The circumference area of flange 20b is in contact with ring-shaped protrusion 27a, and they are fixed together. An air path 27c is bored through ring-shaped protrusion 27a, and a work-stopper 29 is mounted in the center of membrane 27.

A blind air path 28a lies in a radial direction on ring-shaped adapter 28 and connects to air path 27c, which is further connected to air path 24. An air path 26, formed between the inside of membrane 27 and the outside of chuck body 20, is connected to air path 25.

A manifold journal 30 is mounted on a non-rotating part 40 by means of a manifold journal fixing part 39. A bore 30a passes through cylindrical section 20a and manifold journal 30 in an axial direction. Two radially-directed air inlets 30b and 30c are connected to air tubes 34 and 35 respectively in the portion of bore 30a that lies within manifold journal 30. Nipples 31 and 32 are mounted at the respective outside openings of air inlets 30b and 30c. A stopper assembly 33 with a coolant inlet 33a is mounted at the top of manifold journal 30 above and connected to a coolant tube 36 within bore 30a.

A protection pipe 37 is mounted within bore 30a below manifold journal 30. Parts of air tubes 34 and 35 and coolant tube 36 pass through protection pipe 37. The end of protection pipe 37 remote from stopper assembly 33 has a branched collar 37a.

At the opening of wide bore 21a, which runs through cylindrical section 20a and flange section 20b, there is a female screw thread 21c in the chuck body. A male screw 38a is threaded into female screw thread 21c. Male screw 38a is contiguous with the outer surface of a sleeve 38. At the end of sleeve 38 remote from the chuck body 20, a pair of projections 38b match the slots of branched collar 37a.

A tubular path 39a, which can be received over protection pipe 37, is bored at the center of manifold journal fixing part 39. Manifold journal fixing part 39 has a plurality of holes 41 around the circumference.

Protection pipe 37 is inserted into the bore of a main axis of the machine tool. Then branched collar 37a, mounted at the end of protection pipe 37, is fitted to branched member 38b, mounted at the matching end of sleeve 38. Male screw 38a on sleeve 38 is screwed into female screw thread 21c located at the opening of wide portion 21a of stepped bore 21. When male screw 38a and female screw thread 21c are tightened together, protection pipe 37, which is united to manifold journal 30, is pulled out, releasing branched collar 37a and branched member 38b. At the same time, air tubes 34 and 35 are connected to air paths 22 and 23 made in cylindrical section 20a of chuck body 20.

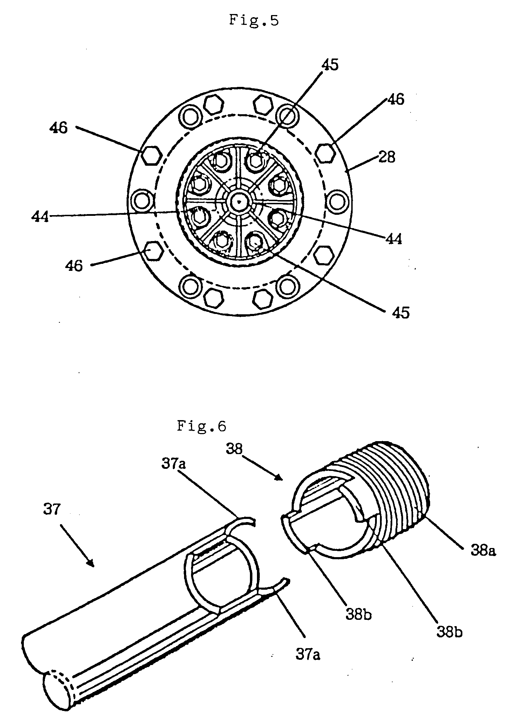

Referring to Fig. 5, a set of work-holding hooks 44 is mounted on membrane 27 with fixing bolts 45, so work holding hooks 44 can be removed freely. Ring-shaped protrusion 27a, which is mounted around the circumference of membrane 27 as shown in Fig. 2, and the circumference area of flange 20b, which is in contact with ring-shaped protrusion 27a, are fixed together with a plurality of fastening bolts 46.

Referring to Fig. 6, which shows the relationship between protection pipe 37 and sleeve 38, the threads of male screw 38a surround the outer surface of sleeve 38. At one end of sleeve 38, a branched member 38b is provided to match branched collar 37a at the matching end of protection pipe 37. When male screw 38a and female screw thread 21c are tightened together, protection pipe 37, which is united to manifold journal 30, is pulled out, releasing branched collar 37a and branched member 38b, as described above.

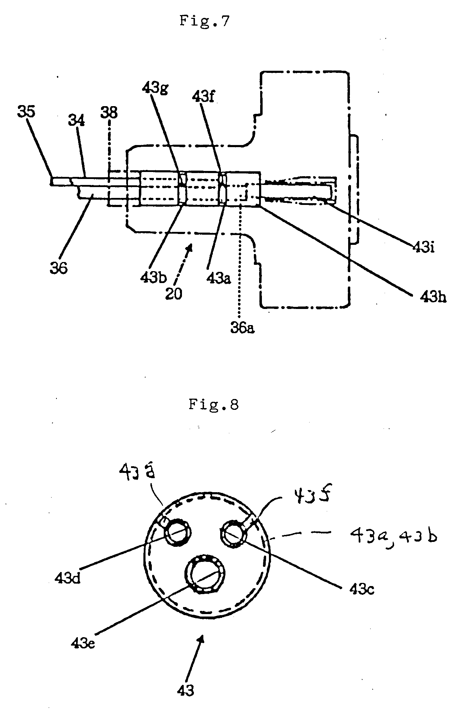

Referring to Figs. 7 and 8, two recessed grooves 43a and 43b lie on an edge surface of cylindrically configured spacer 43 and communicate with radial passages 43f, 43g formed in the spacer. these are located relatively of cylindrical section 20a at positions that correspond to air paths 22 and 23. Two tubular paths 43c and 43d in the spacer lie axially relatively of cylindrical section 20a to let air tubes 34 and 35 be inserted therethrough. A parallel tubular path 43e in the spacer carries coolant tube 36. The spacer 43, passages 43f and 43g communicate with grooves 43a and 43b.

Leading edge 36a of coolant tube 36 is inserted half way through a tip 43h of spacer 43. A coolant discharge pipe 43i runs through, while keeping clearance between, work-stopper 29 and membrane 27. Coolant discharge pipe 43i is mounted at the end of a narrow portion 21b of stepped bore 21. By its insertion halfway at tip 43h, coolant discharge pipe 43i is lined up with leading edge 36a of coolant tube 36. Coolant is thereby directed into the field of the work.

As noted above the present invention does not require that a manifold journal be fixed to a chuck body as does the prior-art embodiment in Japanese Patent Application No. 2-94863. That is, in the present invention, manifold journal 30 is separated from chuck body 20 and mounted easily on non-rotating part 40 of a machine tool via manifold journal fixing part 39.

Manifold journal fixing part 39 is slid on protection pipe 37 until manifold journal 30 is held at its center of mass. Thus, manifold journal 30 is well balanced when it is mounted.

Pressurized air entering manifold journal 30 via nipples 31 and 32 into air inlets 30b and 30c, is distributed from manifold journal 30 via air tubes 34 and 35, passes through spacer 43 and either air paths 22, 24, 27c, and 28a or air paths 23 and 25, to be led to membrane 27. The pressurized air activates either the outer area or the center area of membrane 27, to hold the work securely from the outside or the inside respectively.

Spacer 43 is inserted to maintain a small clearance between inner walls of wide portion 21a of stepped bore 21 made in cylindrical section 20a of chuck body 20. Spacer 43 holds air tubes 34 and 35 and coolant tube 36. Access holes 43f and 43g in spacer 43 connect air paths 22 and 23 made in cylindrical section 20a of chuck body 20 to air tubes 34 and 35. Thus, when pressurized air is delivered via air tubes 34 and 35, the pressurized air penetrates the clearance space created between spacer 43, which is non-rotating, and the inner surface of the wide portion 21a of stepped bore 21, which rotates together with chuck body 20. As a result, there is established in the clearance space annular air rings which function as air bearings on which the chuck body rides, allowing the chuck body 20 to rotate smoothly and without adverse vibration.

Spacer 43 is installed so that sleeve 38 is screwed into female screw thread 21c tapped at the opening of wide portion 21a of stepped bore 21, and branched piece 38b of sleeve 38 engages branched collar 37a of protection pipe 37. Thus spacer 43 is kept from sliding out of the opening of wide portion 21a. Thus, sleeve 38 is securely assembled, assuring easy connection of air tubes 34 and 35 and coolant tube 36 into chuck body 20.

Having described a preferred embodiment of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. In an air-operated chuck which includes a chuck body in which an inflatable membrane is carried, the membrane being actuated with a pressurized air flow to urge gripping hooks thereon into gripping holding contact with a workpiece, the chuck body having an axial bore therein, the axial bore being receptive of plural tubes therein for delivery of pressurized air and a coolant to use points at the chuck,
a spacer received in said axial bore, said spacer having through openings therein for reception of the plural tubes, the spacer having radial passages therein extending from communication with the spacer openings in which pressurized air carrying tubes are received to communication with a spacer edge surface, an outlet end of the pressurized air carrying tubes being in communication with said radial passages whereby pressurized air therefrom can flow outlet at spacer edge surfaces to establish annular air rings between the spacer edge surface and a surface of the axial bore of the chuck body on which the chuck body rides when the chuck body rotates about an axis central to the bore.

2. The air-operated chuck of claim 1 in which the spacer radial passages are axially aligned with passages in the chuck body extending radially outwardly a distance from the chuck body axial bore and thence in the chuck body parallel to the axial bore of the chuck body to a communication locations with the membrane.

3. The air-operated chuck of claim 1 in which the axial bore of the chuck body at an entry end thereof is threaded along a certain length of the axial bore, and a sleeve threaded into said bore along said certain bore length, said sleeve retaining said spacer in said axial bore.

4. The air-operated chuck of claim 1 in which the edge surface of the spacer has continuous grooves extending therearound at locations in register with the spacer radial passages.

5. The air-operated chuck of claim 4 in which the spacer is a cylindrically-shaped member.

6. The air-operated chuck of claim 3 further comprising a protection pipe enclosing a major length run of the tubes carrying pressurized air and coolant, said protection pipe at an end thereof being fixed to a non-rotatable structure, an opposite end of the protection pipe having a branched collar, the sleeve received in the chuck body axial bore having a branched tip end companion fittable to the protection pipe collar to facilitate rotatably threading and unthreading the sleeve from the chuck body.
